(19) Europäisches Patentamt
European Patent Office
Office européen des brevets

(11) **EP 2 512 114 A2**

(12) **EUROPEAN PATENT APPLICATION**

(43) Date of publication:
**17.10.2012 Bulletin 2012/42**

(51) Int Cl.:
*H04N 1/333* (2006.01)     *H04N 1/00* (2006.01)

(21) Application number: **12163940.5**

(22) Date of filing: **12.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.04.2011 US 201161475447 P**

(71) Applicants:
• **Kabushiki Kaisha Toshiba**
  **Tokyo 105-8001 (JP)**
• **Toshiba TEC Kabushiki Kaisha**
  **Tokyo 141-8664 (JP)**

(72) Inventors:
• **Ohuchi, Takaharu**
  **Shinagawa-ku, Tokyo 141-8664 (JP)**
• **Oka, Tomohide**
  **Shinagawa-ku, Tokyo 141-8664 (JP)**
• **Sasano, Jun**
  **Shinagawa-ku, Tokyo 141-8664 (JP)**

(74) Representative: **Uchida, Kenji**
  **SA Fedit-Loriot**
  **38, avenue Hoche**
  **75008 Paris (FR)**

(54) **Communication terminal connecting to IP network, and image data transmission method**

(57)     Typically, a communication terminal according to an embodiment is a communication terminal for transmitting image data to a transmission destination communication terminal through an initiation protocol (IP) network. The communication terminal includes a display unit, a data size calculation unit, an acquisition unit, a projection calculation unit, and a display controller. The data size calculation unit calculates the size of image data to be transmitted. The acquisition unit acquires speed information indicating a communication speed at which communication can be performed with the transmission destination communication terminal. The projection calculation unit calculates at least either one of a projected communication fee and a projected communication time when transmitting the image data at the communication speed indicated by the acquired speed information. The display controller makes the display unit display the result of calculation of the projection calculation unit.

FIG.1

**Description**

CROSS-REFERENCE TO RELATED APPLICATION

This application is based upon and claims the benefit of priority from US provisional application 61/475,447, filed on April 14, 2011; the entire contents of which are incorporated herein by reference.

FIELD

Embodiments described in this specification relate to a communication technology for an IP network.

BACKGROUND

Next-generation networks (NGNs) have recently been under development as an alternative to the conventional telephone networks. The NGN is intended to integrate and restructure IP networks for Internet services and telephone networks for telephone services by using initiation protocol(IP) technology.

At present, when communication terminals connected to an NGN transmit and receive images to/from each other (IP-FAX), the communication speed is fixed to 1 Mbps. Fees are charged according to communication time it takes to complete the communication.

DESCRIPTION OF THE DRAWINGS

Fig. 1 is a diagram showing an NGN and respective MFPs according to a first embodiment;
Fig. 2 is a functional block diagram of a controller;
Fig. 3 is a flowchart for explaining processing for transmitting image data;
Fig. 4 is a diagram showing a data table in which the amounts of charge are associated with communication speeds;
Fig. 5 is a diagram showing a communication speed selection screen;
Fig. 6 is a diagram showing the communication speed selection screen where a maximum communication speed is selected; and
Fig. 7 is a functional block diagram of a controller according to a second embodiment.

DETAILED DESCRIPTION

Typically, a communication terminal according to an embodiment is a communication terminal for transmitting image data to a transmission destination communication terminal through an initiation protocol (IP) network. The communication terminal includes a display unit, a data size calculation unit, an acquisition unit, a projection calculation unit, and a display controller. The data size calculation unit calculates the size of image data to be transmitted. The acquisition unit acquires speed information indicating a communication speed at which communication can be performed with the transmission destination communication terminal. The projection calculation unit calculates at least either one of a projected communication fee and a projected communication time when transmitting the image data at the communication speed indicated by the acquired speed information. The display controller makes the display unit display the result of calculation of the projection calculation unit.

Embodiments will be described below with reference to the drawings.

(First Embodiment)

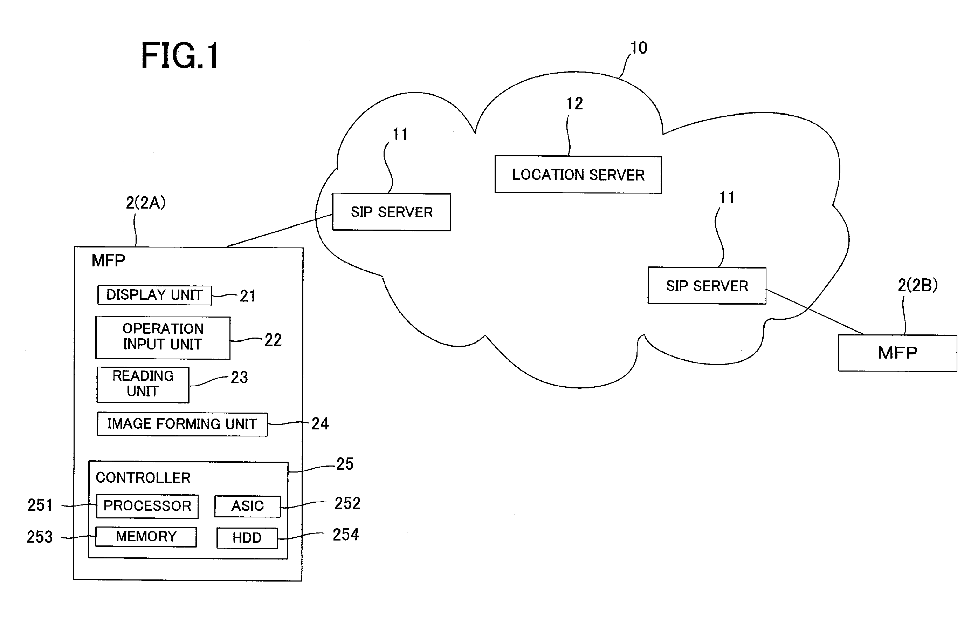

Fig. 1 is a diagram showing an NGN 10 (IP network) and respective multifunction peripherals (MFPs) 2 (communication terminals). In the following description, an MFP 2 that transmits image data will sometimes be referred to as a transmission source MFP 2A. An MFP 2 to which image data is transmitted will sometimes be referred to as a transmission destination MFP 2B.

The NGN 10 includes Session Initiation Protocol (SIP) servers 11 and a location server 12. When the MFPs 2 connected to the NGN 10 perform transmission and reception of image data to/from each other, the SIP servers 11 relay IP messages and the image data to/from the MFPs 2.

The MFPs 2 are multifunction peripherals each having a scanner, printer, FAX, and/or other functions. An MFP 2 transmits image data to a transmission destination MFP 2 by using the SIP which is a file transfer protocol for the NGN. The MFPs 2 each include a display unit 21, an operation input unit 22, a reading unit 23, an image forming unit 24, and a controller 25. In Fig. 1, only one of the MFPs 2 (2A) is shown with the configuration of the components 21 to 25. The other MFP 2 (2B) has the same configuration as that of the one MFP 2 (2A).

An example of the display unit 21 is a touch panel. The display unit 21 displays various screens such as a setting screen under control of the controller 25. Examples of the operation input unit 22 include a button and a touch panel. The operation input unit 22 accepts user's operation inputs. The reading unit 23 includes a charge-coupled device (CCD) image sensor, for example. The reading unit 23 reads an image on a sheet.

The image forming unit 24 forms an image on a sheet, for example, by forming a toner image on a photosensitive member and transferring the toner image to the sheet. The image forming unit 24 may form an image on a sheet by discharging ink from a header onto the sheet. The controller 25 controls the entire MFP 2. The controller 25 includes a processor 251, an application specific integrated circuit (ASIC) 252, a memory 253, and a hard disk drive (HDD) 254.

The controller 25 makes the MFP 2 perform various functions by the processor 251 reading and processing a program or programs in the memory 253. The ASIC 252 may perform part or all of the processing of the processor 251.

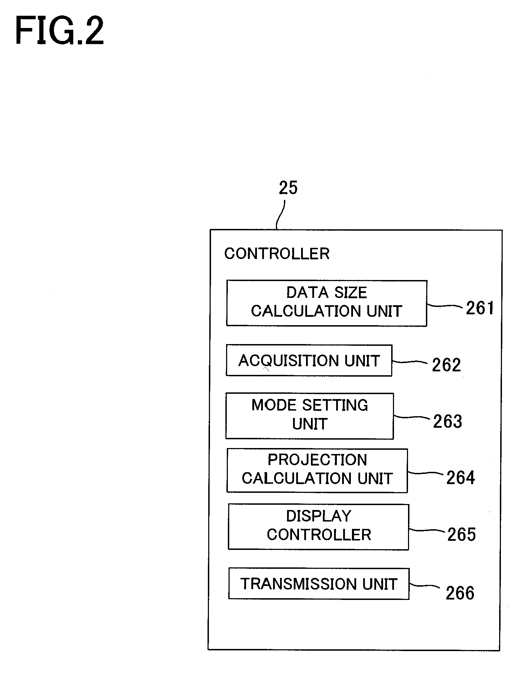

As shown in Fig. 2, the controller 25 includes, as its functional blocks, a data size calculation unit 261, an acquisition unit 262, a mode setting unit 263, a projection calculation unit 264 (communication speed calculation unit), a display controller 265, and a transmission unit 266.

The mode setting unit 263 sets the MFP 2 to any one of a communication speed selection mode, a first automatic selection mode (first mode), and a second automatic selection mode (second mode) as a mode during transmission of image data. The communication speed selection mode is a mode in which the user selects the communication speed of image data. The first automatic selection mode is a mode in which the MFP 2 automatically transmits image data at a communication speed that provides a minimum amount of charge. The second automatic selection mode is a mode in which the MFP 2 automatically transmits image data at a maximum communication speed.

The display controller 265 makes the display unit 21 display a mode selection screen from which the modes can be selected. The mode setting unit 263 sets the MFP 2 to a mode accepted by the mode selection screen. The user can call the mode selection screen and set a mode to transmit image data before transmitting the image data. In the present embodiment, the MFPs 2 in their initial state shall be set to the communication speed selection mode.

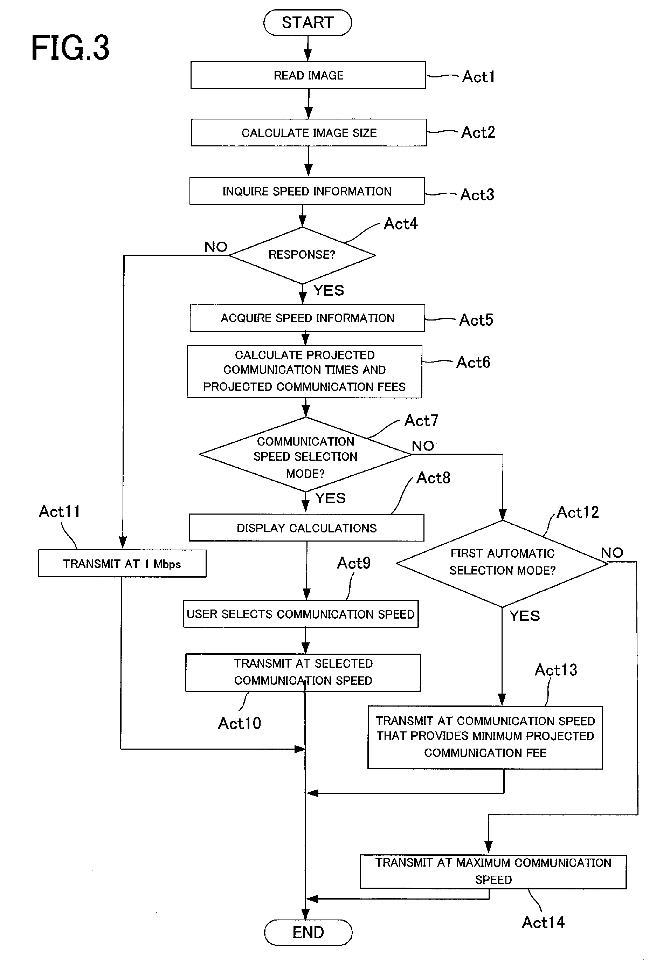

Processing for transmitting image data (image data transmission method) will be described below with reference to a flowchart of Fig. 3.

The transmission source MFP 2A reads an image on a sheet by using the reading unit 23. The transmission source MFP 2A stores image data into a page memory, and performs compression processing, addition of header information, etc. The transmission source MFP 2A then saves the image data into the HDD 254 (Act1). The user may input the image data to be transmitted into the transmission source MFP 2A by using a universal serial bus (USB) or the like.

The data size calculation unit 261 calculates the size of the image data to be transmitted stored in the HDD 254 (Act2).

Next, the acquisition unit 262 acquires speed information on all communication speeds at which the transmission destination MFP 2B can perform communication. Specifically, the acquisition unit 262 inquires of the transmission destination MFP 2B via the SIP servers 11 about communication speeds at which communication can be performed (Act3). If the transmission destination MFP 2B can transmit speed information to the transmission source MFP 2A (Act4: YES), the acquisition unit 262 acquires from the transmission destination MFP 2B side a response including speed information that indicates communication speeds at which the transmission destination MFP 2B can perform communication (Act5). Suppose that in the present embodiment, the acquisition unit 262 acquires speed information indicating communication speeds of 64 kbps, 512 kbps, 1 Mbps, and 2.6 Mbps from the transmission destination MFP 2B.

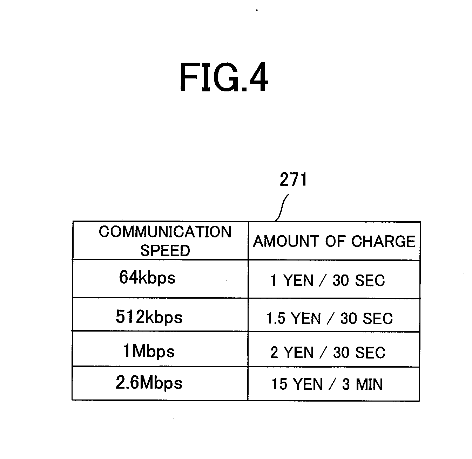

The projection calculation unit 264 calculates projected communication times and projected communication fees when transmitting the image data at the communication speeds indicated by the acquired speed information, respectively (Act6). When using the lines of the NGN 10, the amount of charge is set depending on communication speed. The memory 253 of the transmission source MFP 2A contains a data table 271 shown in Fig. 4, in which the amounts of charge are associated with respective communication speeds. The projection calculation unit 264 calculates the projected communication fees and projected communication times for the respective communication speeds on the basis of the communication speeds indicated by the acquired speed information, the amounts of charge associated with the respective communication speeds in the data table 271, and the size of the image data. A method of calculating a projected communication fee and a projected communication time will be briefly described below.

The projection calculation unit 264 calculates a projected communication time according to the following equation (1):

$$\text{Size of image data} \div \text{communication speed} = \text{projected communication time.} \quad \ldots (1)$$

For example, if the image data to be transmitted has a size of 100 MB, the projection calculation unit 264 calculates that the projected communication time at a communication speed of 2.6 Mbps is 38 sec, by 100 (MB) ÷ 2.6 (Mbps) = 38 (sec).

The projection calculation unit 264 calculates a projected communication fee according to the following equation (2):

$$\text{Projected communication time} \times \text{the amount of charge} = \text{projected communication fee.} \quad \ldots (2)$$

As shown in Fig. 4, fees for communication speeds of 64 kbps, 512 kbps, and 1 Mbps are charged in units of 30 sec. Fees for a communication speed of 2.6 Mbps are charged in units of three minutes. With the communication speed of 2.6 Mbps, the projected communication time is 38 sec as mentioned above. The amount of charge is 15 yen / 3 min. Since fees are charged in units of three minutes, 15 yen will be charged for 38 sec which is shorter than three minutes.

That is, if the size of the image data is 100 MB and the communication speed is 2.6 Mbps, the projection calculation unit 264 calculates that the projected communication fee is 15 yen, by projected communication time × the amount of charge = 3 (min) × 15 (yen) / 3 (min) = 15 (yen). Here, 38 sec, shorter than three minutes, is rounded up to three minutes for calculation. Given a projected communication time of 3 min + 38 sec, the fee is calculated for six minutes.

Having calculated the projected communication times and projected communication fees for the respective communication speeds as described above, the projection calculation unit 264 calculates a communication speed that provides a minimum projected communication fee among the communication speeds, and a maximum communication speed among the communication speeds.

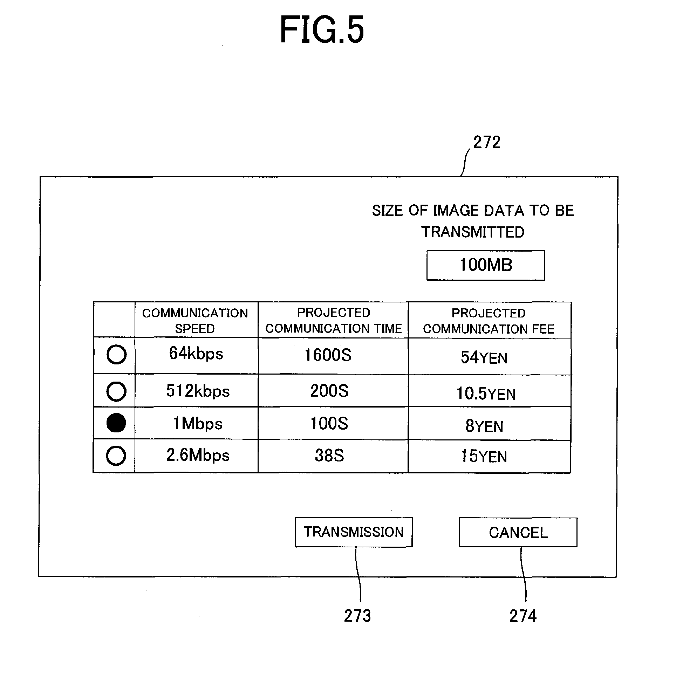

If the transmission source MFP 2A is set to the communication speed selection mode (Act7: YES), the display controller 265 makes the display unit 21 display a communication speed selection screen 272 shown in Fig. 5, which includes the calculations of the projection calculation unit 264 (Act8). In the communication speed selection screen 272, communication speeds are associated with respective projected communication fees and projected communication times. Any one of the communication speeds can be selected in the communication speed selection screen 272.

In an initial state of the communication speed selection screen 272 where no user selection has been accepted of a communication speed, the display controller 265 makes a communication speed of the minimum projected communication fee selected. In the communication speed selection screen 272 of Fig. 5, the selected communication speed is marked with a black circle. Unselected communication speeds are marked with a white circle. The communication speed selection screen 272 includes a transmission button 273 for transmitting image data and a cancel button 274 for canceling image data transmission.

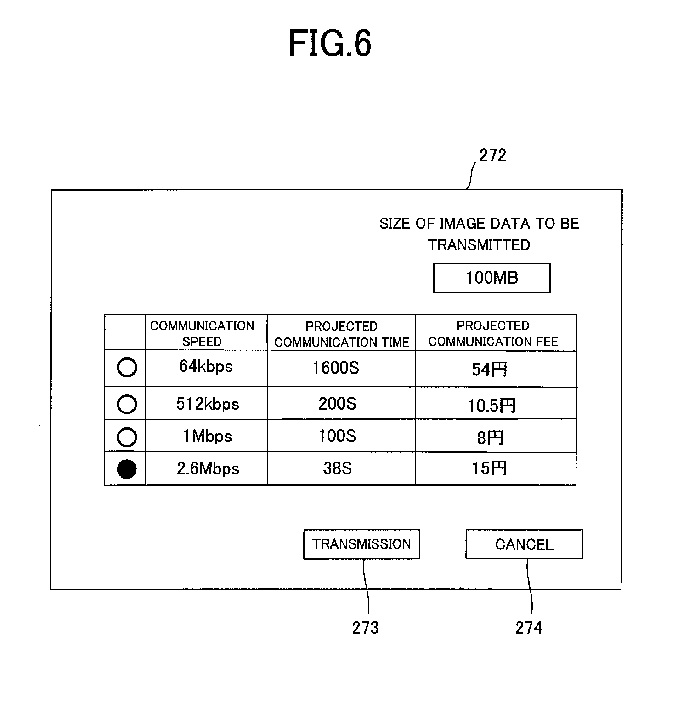

In an initial state of the communication speed selection screen 272, as shown in Fig. 6, the display controller 265 may make a maximum communication speed selected. Whether the initial state of the communication speed selection screen 272 takes the state of Fig. 5 where the communication speed of the minimum communication fee is selected or that of Fig. 6 where the maximum communication speed is selected may be set by the user calling an appropriate setting screen.

When a communication speed is selected in the communication speed selection screen 272 and the operation input unit 22 accepts the selection of the transmission button 273 (Act9), the transmission unit 266 transmits the image data at the communication speed accepted through the operation input unit 22 (Act10).

If the transmission destination MFP 2B is not able to transmit speed information to the transmission source MFP 2A (Act4: NO), the transmission source MFP 2A transmits the image data to the transmission destination MFP 2B at the set communication speed of 1 Mbps (Act11).

If the transmission source MFP 2A is set to the first automatic selection mode (Act7: NO, Act 12: YES), the transmission source MFP 2A automatically transmits the image data at the communication speed of 1 Mbps, which provides the minimum amount of charge, without displaying the communication speed selection screen 272 (Act 13).

If the transmission source MFP 2A is set to the second automatic selection mode (Act7: NO, Act12: NO), the transmission source MFP 2A automatically transmits the image data at the maximum communication speed of 2.6 Mbps without displaying the communication speed selection screen 272 (Act14).

The establishment of the session and the transmission and reception of image data between the transmission source MFP 2A and the transmission destination MFP 2B described above are performed through the SIP servers 11. The established date and time and the terminated date and time of the session between the MFPs 2A and 2B and the communication speed at which the image data is transmitted and received are recorded on the SIP servers 11 or other server in the NGN 10. The administrator of the SIP servers 11 charges the fee to the user of the transmission source MFP 2A, who is a user of the NGN 10, on the basis of the established date and time and the terminated date and time of the session and the communication speed at which the image data is transmitted and received. Incidentally, the SIP servers 11 also have a registrar function of registering position information (such as a uniform resource identifier (URI)) of user agents of the respective MFPs 2A and 2B into the location server 12.

In the foregoing description, no mention has been made that: the transmission source MFP 2A transmits an INVITE message to the transmission destination MFP 2B through the SIP servers 11 when establishing a communication connection between the MFPs 2A and 2B; and the transmission destination MFP 2B transmits "200 OK" to the transmission source MFP 2A as a status code for acknowledging the establishment of the session in response to the INVITE message, whereby a session is established. In the foregoing description, it has also been omitted that a session is established between the MFPs 2A and 2B before an inquiry for speed information and a response to the inquiry are made between the MFPs 2A and 2B.

Other points omitted in the foregoing description include that the inquiry for speed information and the response are followed by the transmission of the image data, and after the transmission destination MFP 2B finishes printing or the like, the transmission destination MFP 2B transmits "BYE" to the transmission source MFP 2A through the SIP servers 11 as a status code for terminating the session. Another point omitted in the foregoing description is that the transmission source MFP 2A, receiving the "BYE" message, transmits "200 OK" to the transmission destination MFP 2B through the SIP servers 11 to terminate the session between the MFPs 2A and 2B.

The transactions of IP messages between communication terminals in the NGN 10 in establishing and terminating a session are disclosed in detail in Japanese Patent Application Laid-Open Nos. 2009-26130, 2010-219688, and 2010-245617. A detailed description of such typical transactions is thus omitted.

(Second Embodiment)

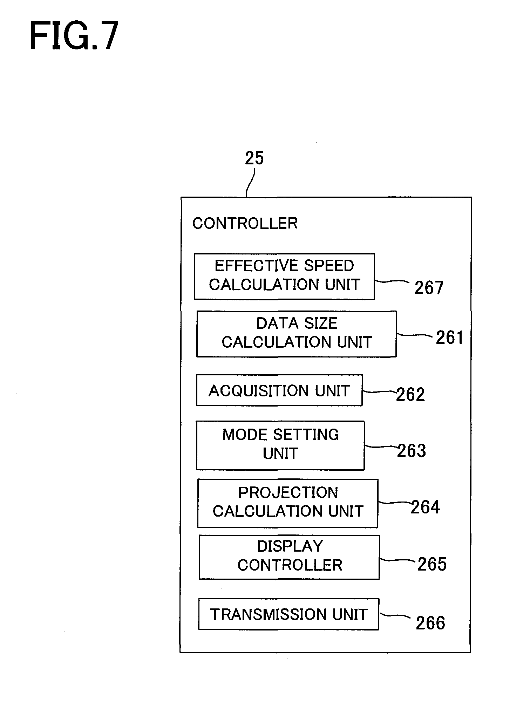

Fig. 7 is a functional block diagram of the controller 25 of an MFP 2.

The controller 25 of the transmission source MFP 2A according to the present embodiment includes an effective speed calculation unit 267 as one of its functional units. The effective speed calculation unit 267 calculates the effective speed of communication with the transmission destination MFP 2B. Specifically, the effective speed calculation unit 267 calculates the effective speed of communication by dividing the size of image size by an actual communication time after the transmission source MFP 2A transmits the image data to the transmission destination MFP 2B. The effective speed calculation unit 267 stores the calculated effective speed into the memory 253. The memory 253 stores a set communication speed, the size of image data, a projected communication time, a projected communication fee, and calculated effective speed as a history each time the transmission source MFP 2A transmits image data to the transmission destination MFP 2B.

Based on such a past transmission history stored in the memory 253, the effective speed calculation unit 267 calculates the effective speed of transmission of image data as a communication speed for the projection calculation unit 264 to use in calculating a projected communication time and a projected communication fee. For example, suppose that when the transmission source MFP 2A transmits image data, there are a plurality of past history records in which the settings of the transmission destination MFP 2B and the communication speed are the same as those in the current transmission of the image data. In such a case, the effective speed calculation unit 267 calculates the average of the effective speeds in those past history records as the effective speed of the current transmission of the image data. The projection calculation unit 264 calculates a projected communication fee and a projected communication time on the basis of the calculated effective speed and the size of the image data.

In the present embodiment, if a delay occurs during data transmission and reception due to reasons such as heavy traffic on lines, a more accurate projected communication time and projected communication fee can be displayed. The user can conveniently select a communication speed on the basis of such projections.

The foregoing embodiments have dealt with the cases where the projection calculation unit 264 calculates both a projected communication fee and a projected communication time when transmitting image data at a communication speed indicated by acquired speed information. However, the projection calculation unit 264 may calculate either one alone. In such a case, the display controller 265 makes the display unit 21 display the projected communication fee or projected communication time calculated by the projection calculation unit 264.

A recording medium may be of any form as long as the recording medium can store a program and is computer-readable. Specifically, examples of recording media include internal storage devices that are implemented inside a computer, such as a ROM and a RAM, portable storage media such as a CD-ROM, a flexible disk, a DVD disk, a magneto-optical disk, and an IC card, a database that contains a computer program, and other computers and databases thereof. Functions obtained by installation or downloading may be implemented in cooperation with an OS or the like inside an apparatus. Part or all of a program may be a dynamically-generated execution module or modules.

The order of processing in the foregoing embodiments may be different from that illustrated in the embodiments.

As has been described in detail above, according to the technology described in this specification, it is possible to provide a communication technology for an IP network.

While certain embodiments have been described, these embodiments have been presented by way of example only, and are not intended to limit the scope of invention. Indeed, the novel apparatus, methods and system described herein may be embodied in a variety of other forms; furthermore, various omissions, substitutions and changes in the form of the apparatus, methods and system described herein may be made without departing from the spirit of the inventions. The accompanying claims and their equivalents are intended to cover such forms or modifications as would fall within the scope and spirit of the inventions.

**Claims**

1. A communication terminal configured to transmit image data to a transmission destination communication terminal through an initiation protocol (IP) network, the communication terminal comprising:

   a display unit;
   a data size calculation unit configured to calculate a size of image data to be transmitted;
   an acquisition unit configured to acquire speed information indicating a communication speed at which communication can be performed with the transmission destination communication terminal;
   a projection calculation unit configured to calculate at least either one of a projected communication fee and a projected communication time when transmitting the image data at the communication speed indicated by the acquired speed information; and
   a display controller configured to make the display unit display a result of calculation of the projection calculation unit.

2. The communication terminal according to claim 1, wherein:

   the projection calculation unit calculates both the projected communication fee and the projected communication time; and
   the display controller makes the display unit display both the projected communication fee and the projected communication time.

3. The communication terminal according to claim 1, wherein
   if the transmission destination communication terminal can transmit speed information to the communication terminal, the acquisition unit acquires the speed information by inquiring of the transmission destination communication terminal about speed information indicating a communication speed at which communication can be performed with the communication terminal.

4. The communication terminal according to claim 1, wherein
   if the transmission destination communication terminal can perform communication at a plurality of communication speeds, the acquisition unit acquires all speed information indicating the communication speeds at which the transmission destination communication terminal can perform communication.

5. The communication terminal according to claim 4, further comprising:

   an operation input unit configured to accept a user's operation input; and
   a transmission unit configured to transmit the image data to the transmission destination communication terminal, and wherein
   the display controller makes the display unit display a selection screen in which the communication speeds indicated by the respective pieces of acquired speed information are associated with at least either projected communication fees or projected communication times, respectively, and on which any one of the communication speeds can be selected, and
   the transmission unit transmits the image data at a communication speed that is selected on the selection screen through the operation input unit.

6. The communication terminal according to claim 5, wherein:

   the projection calculation unit calculates a communication speed that provides a minimum projected communication fee among the communication speeds indicated by the respective pieces of acquired speed information when transmitting the image data at the respective communication speeds; and

in an initial state where no user selection has been accepted, the display controller makes the display unit display a selection screen in which the communication speed that provides the minimum projected communication fee is selected.

7. The communication terminal according to claim 5, wherein
in an initial state where no user selection has been accepted, the display controller makes the display unit display a selection screen in which a maximum communication speed is selected.

8. The communication terminal according to claim 5, comprising
a mode setting unit configured to set the communication terminal to a mode accepted through the operation input unit between a first mode and a second mode, the first mode being a mode in which a communication speed that provides a minimum projected communication fee is selected in the selection screen of an initial state, the second mode being a mode in which a maximum communication speed is selected in the selection screen of an initial state, and wherein:

if the mode setting unit sets the communication terminal to the first mode,
the projection calculation unit calculates a communication speed that provides a minimum projected communication fee among the communication speeds indicated by the respective pieces of acquired speed information when transmitting the image data at the respective communication speeds, and the display controller, in an initial state where no user selection has been accepted, makes the display unit display a selection screen in which the communication speed providing the minimum projected communication fee is selected; and
if the mode setting unit sets the communication terminal to the second mode,
the display controller, in an initial state where no user selection has been accepted, makes the display unit display a selection screen in which a maximum communication speed is selected.

9. The communication terminal according to claim 1, comprising
an effective speed calculation unit configured to calculate an effective speed of communication with the transmission determination communication terminal, and wherein
the projection calculation unit calculates at least either one of the projected communication fee and the projected communication time on the basis of the effective speed and the size of the image data.

10. The communication terminal according to claim 1, comprising:

a reading unit configured to read an image on a sheet; and
an image forming unit configured to form an image on a sheet on the basis of image data.

11. The communication terminal according to claim 1, wherein
the IP network is a next-generation network (NGN), and a communication connection between the communication terminal and the transmission destination communication terminal is established by using the Session Initiation Protocol (SIP).

12. A communication terminal configured to transmit image data to a transmission destination communication terminal through an initiation protocol (IP) network, the communication terminal comprising:

a data size calculation unit configured to calculate a size of image data to be transmitted;
an acquisition unit configured to acquire speed information indicating communication speeds at which communication can be performed with the transmission destination communication terminal;
a communication speed calculation unit configured to calculate a communication speed that provides a minimum projected communication fee among the communication speeds indicated by the acquired speed information when transmitting the image data at the communication speeds indicated by the acquired speed information; and
a transmission unit configured to transmit the image data at the calculated communication speed that provides the minimum projected communication fee.

13. The communication terminal according to claim 12, wherein
if the transmission destination communication terminal can transmit speed information to the communication terminal, the acquisition unit acquires the speed information by inquiring of the transmission destination communication terminal about speed information indicating a communication speed at which communication can be performed with the communication terminal.

**14.** The communication terminal according to claim 12, comprising
an effective speed calculation unit configured to calculate an effective speed of communication with the transmission determination communication terminal, and wherein
the communication speed calculation unit calculates the communication speed that provides the minimum projected communication fee on the basis of the effective speed and the size of the image data.

**15.** The communication terminal according to claim 12, wherein
the IP network is a next-generation network (NGN), and a communication connection between the communication terminal and the transmission destination communication terminal is established by using the Session Initiation Protocol (SIP).

**16.** A communication terminal configured to transmit image data to a transmission destination communication terminal through an initiation protocol (IP) network, the communication terminal comprising:

a data size calculation unit configured to calculate a size of image data to be transmitted;
an acquisition unit configured to acquire speed information indicating communication speeds at which communication can be performed with the transmission destination communication terminal; and
a transmission unit configured to transmit the image data at a maximum communication speed among the communication speeds indicated by the acquired speed information when transmitting the image data at the communication speeds indicated by the acquired speed information.

**17.** The communication terminal according to claim 16, wherein
if the transmission destination communication terminal can transmit speed information to the communication terminal, the acquisition unit acquires the speed information by inquiring of the transmission destination communication terminal about speed information indicating a communication speed at which communication can be performed with the communication terminal.

**18.** The communication terminal according to claim 16, comprising:

a reading unit configured to read an image on a sheet; and
an image forming unit configured to form an image on a sheet on the basis of image data.

**19.** The communication terminal according to claim 16, wherein
the IP network is a next-generation network (NGN), and a communication connection between the communication terminal and the transmission destination communication terminal is established by using the Session Initiation Protocol (SIP).

**20.** An image data transmission method for a communication terminal configured to transmit image data to a transmission destination communication terminal through an initiation protocol (IP) network, the image data transmission method comprising:

calculating a size of image data to be transmitted;
acquiring speed information indicating a communication speed at which communication can be performed with the transmission destination communication terminal;
calculating at least either one of a projected communication fee and a projected communication time when transmitting the image data at the communication speed indicated by the acquired speed information; and
making a display unit display a result of the calculating.

FIG.1

MFP 2(2B)

SIP SERVER 11

LOCATION SERVER 12

10

SIP SERVER 11

MFP 2(2A)

DISPLAY UNIT 21

OPERATION INPUT UNIT 22

READING UNIT 23

IMAGE FORMING UNIT 24

CONTROLLER 25

PROCESSOR 251

ASIC 252

MEMORY 253

HDD 254

# FIG.2

25

CONTROLLER

| DATA SIZE CALCULATION UNIT | ~261 |

| ACQUISITION UNIT | ~262 |

| MODE SETTING UNIT | ~263 |

| PROJECTION CALCULATION UNIT | ~264 |

| DISPLAY CONTROLLER | ~265 |

| TRANSMISSION UNIT | ~266 |

**FIG.3**

START

READ IMAGE — Act1

CALCULATE IMAGE SIZE — Act2

INQUIRE SPEED INFORMATION — Act3

Act4
RESPONSE? NO

YES

ACQUIRE SPEED INFORMATION — Act5

CALCULATE PROJECTED COMMUNICATION TIMES AND PROJECTED COMMUNICATION FEES — Act6

Act7
COMMUNICATION SPEED SELECTION MODE? NO

YES Act8
DISPLAY CALCULATIONS

Act11
TRANSMIT AT 1 Mbps

Act9
USER SELECTS COMMUNICATION SPEED

Act12
FIRST AUTOMATIC SELECTION MODE? NO

YES

Act13
TRANSMIT AT COMMUNICATION SPEED THAT PROVIDES MINIMUM PROJECTED COMMUNICATION FEE

TRANSMIT AT SELECTED COMMUNICATION SPEED

Act10

TRANSMIT AT MAXIMUM COMMUNICATION SPEED

Act14

END

# FIG.4

271

| COMMUNICATION SPEED | AMOUNT OF CHARGE |
|---|---|
| 64kbps | 1 YEN / 30 SEC |
| 512kbps | 1.5 YEN / 30 SEC |
| 1Mbps | 2 YEN / 30 SEC |
| 2.6Mbps | 15 YEN / 3 MIN |

# FIG.5

SIZE OF IMAGE DATA TO BE TRANSMITTED

272

| 100MB |

| | COMMUNICATION SPEED | PROJECTED COMMUNICATION TIME | PROJECTED COMMUNICATION FEE |
|---|---|---|---|
| ○ | 64kbps | 1600S | 54YEN |
| ○ | 512kbps | 200S | 10.5YEN |
| ● | 1Mbps | 100S | 8YEN |
| ○ | 2.6Mbps | 38S | 15YEN |

| TRANSMISSION | | CANCEL |

273    274

# FIG.6

272

SIZE OF IMAGE DATA TO BE
TRANSMITTED

| 100MB |

| | COMMUNICATION SPEED | PROJECTED COMMUNICATION TIME | PROJECTED COMMUNICATION FEE |
|---|---|---|---|
| ○ | 64kbps | 1600S | 54円 |
| ○ | 512kbps | 200S | 10.5円 |
| ○ | 1Mbps | 100S | 8円 |
| ● | 2.6Mbps | 38S | 15円 |

| TRANSMISSION | | CANCEL |

273    274

# FIG.7

25

```
CONTROLLER

  ┌─────────────────────┐
  │  EFFECTIVE SPEED     │
  │  CALCULATION UNIT    │──── 267
  └─────────────────────┘

    ┌─────────────────────┐
    │  DATA SIZE          │
    │  CALCULATION UNIT   │──── 261
    └─────────────────────┘

  ┌─────────────────────┐
  │  ACQUISITION UNIT    │──── 262
  └─────────────────────┘

  ┌─────────────────────┐
  │  MODE SETTING        │
  │  UNIT                │──── 263
  └─────────────────────┘

  ┌─────────────────────┐
  │  PROJECTION          │
  │  CALCULATION UNIT    │──── 264
  └─────────────────────┘

  ┌─────────────────────┐
  │  DISPLAY             │
  │  CONTROLLER          │──── 265
  └─────────────────────┘

  ┌─────────────────────┐
  │  TRANSMISSION UNIT   │──── 266
  └─────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61475447 B
- JP 2009026130 A
- JP 2010219688 A
- JP 2010245617 A